(19) Europäisches Patentamt
European Patent Office
Office européen des brevets

(11) Veröffentlichungsnummer: **0 158 835**
**B1**

(12) # EUROPÄISCHE PATENTSCHRIFT

(45) Veröffentlichungstag der Patentschrift: **26.08.87**

(51) Int. Cl.⁴: **C 08 G 65/32**, C 08 F 8/04, C 08 G 85/00

(21) Anmeldenummer: **85102994.2**

(22) Anmeldetag: **15.03.85**

(54) **Verfahren zur Herstellung von Hydroxylgruppen enthaltenden Polymeren.**

(30) Priorität: **20.03.84 DE 3410069**

(43) Veröffentlichungstag der Anmeldung: **23.10.85 Patentblatt 85/43**

(45) Bekanntmachung des Hinweises auf die Patenterteilung: **26.08.87 Patentblatt 87/35**

(84) Benannte Vertragsstaaten: **BE DE FR GB IT NL**

(56) Entgegenhaltungen:
**EP - A - 0 061 668**
**DE - A - 1 520 441**
**FR - A - 836 151**

(73) Patentinhaber: **BASF Aktiengesellschaft, Carl-Bosch-Strasse 38, D-6700 Ludwigshafen (DE)**

(72) Erfinder: **Mueller, Herbert, Dr., Carostrasse 53, D-6710 Frankenthal (DE)**

**EP 0 158 835 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Diese Erfindung betrifft ein Verfahren zur Herstellung von Hydroxylgruppen enthaltenden Polymeren, insbesondere die Herstellung von Polytetrahydrofuran mit endständigen Hydroxylgruppen, durch katalytische Hydrierung der entsprechenden Acyloxygruppen enthaltenden Polymeren in Gegenwart von starken Basen.

Polytetrahydrofuran wird üblicherweise unter Verwendung kationischer Katalysatorsysteme aus Tetrahydrofuran hergestellt, wobei ein Polytetramethylenether mit vom Katalysatorsystem und Reaktionsmedium bestimmten, verschiedenen Endgruppen erhalten wird. Polytetrahydrofurane entsprechen daher der allgemeinen Formel

$$X\text{-}[(CH_2)_4\text{-}O]_n\text{-}(CH_2)_4\text{-}Y$$

in der n eine ganze Zahl zwischen 1 bis ungefähr 100 bedeutet, die das Molekulargewicht charakterisiert und X und Y beispielsweise für die folgenden Reste stehen können:

| Katalysatorsystem | X | Y |
|---|---|---|
| | RO | OH, F, Cl |
| $R_3O^+ML^-_{m+1}$ | | |
| $ML_{m+1}$: $BF_4$, $SbCl_6$, $FeCl_4$ | | |
| $AlCl_3$ | | |
| $FSO_3H$ | $FSO_3$ | OH |
| $AlCl_3/CH_3COO$ | $CH_3COO$ | Cl |
| $HClO_4/(CH_3CO)_2O$ | $CH_3COO$ | $CH_3COO$ |
| $SbCl_5/(CH_3CO)_2O$ | $CH_3COO$ | $CH_3COO$ |

R bedeutet einen Kohlenwasserstoffrest und m ist die Wertigkeit der Lewis-Säure $ML_m$.

Da Polytetrahydrofurane hauptsächlich für die Herstellung von Polyurethanen verwendet werden und die Polymere für diesen Zweck endständige Hydroxylgruppen enthalten müssen, ist es erforderlich, die Endgruppen X und Y in den primär erhältlichen Polytetrahydrofuranen in Hydroxylgruppen umzuwandeln. Nach den meisten der bislang bekannt gewordenen Methoden wird alkalisch verseift. Ein solches Verfahren wird z.B. in der US-PS 3 358 042 beschrieben. Die schwierigen verfahrenstechnischen Probleme, die die Verseifungsreaktion makromolekularer Stoffe mit sich bringt, werden hier dadurch überwunden, dass man die Reaktion in speziellen Lösungsmitteln ausführt. Der dafür erforderliche zusätzliche Lösungsmittelkreislauf und die sieben Verfahrensstufen machen das Verfahren unwirtschaftlich. Darüber hinaus ist das Verfahren wenig umweltfreundlich, weil es mit einer erheblichen Salzfracht belastet ist. Diese beträgt je nach dem Molekulargewicht des hergestellten Polytetrahydrofuran 10 bis 35%, bezogen auf das Polymerisat.

Die durch alkalische Katalysatoren initiierte Verseifung hat sich bei den Acyloxygruppen enthaltenden Polymeren als wenig geeignet erwiesen, weil die Bildung schwer zu brechender Emulsionen mit starker Schaumneigung kaum vermieden werden kann, so dass Katalysatoren und Wasser nur schwer voneinander zu trennen sind. Häufig werden dabei auch gefärbte Umsetzungsprodukte erhalten. Auch bei der durch alkalische Katalysatoren initiierten Umesterung der Acyloxygruppen enthaltenden Polymeren mit niederen Alkoholen treten erhebliche Schwierigkeiten auf. Man riskiert bei diesem Verfahren, gelblich bis braun verfärbte Produkte zu erhalten und benötigt erhebliche Katalysatormengen, um eine vollständige Umesterung zu erreichen. So müssen für die Umesterung von Polytetrahydrofuran mit Methanol in Gegenwart des wirksamsten Umesterungskatalysators Natriummethylat mindestens 1000 bis 10 000 Gew.-ppm des Alkoholats verwendet werden, um ein Produkt mit einer Restverseifungszahl < 1 mg KOH/g zu erhalten. Da der Katalysator nach der Umesterung aus dem Produkt, z.B. durch Waschen mit Wasser, entfernt werden muss, kommen zu den relativ hohen Katalysatorkosten noch erhebliche Aufarbeitungskosten hinzu. Deshalb hat man in der DE-OS 2 709 280 vorgeschlagen, als Umesterungskatalysatoren Oxide bzw. Hydroxide des Calziums, Bariums, Strontiums oder Magnesiums zu verwenden, die nach der Umsesterung durch Filtration leichter abgetrennt werden können. Dieser Methode haftet aber der Nachteil jeder Umesterungsreaktion an, wonach die destillative Abtrennung des leichtersiedenden Esters einen erheblichen Energieeinsatz erfordert und zu einer beachtlichen Verteuerung des Endproduktes führt.

Nach den Angaben der DE-OS 2 445 962 und DE-OS 2 445 960 können acyloxygruppenhaltige polymere Stoffe in einer wässrigen Salzlösung, gegebenenfalls in Gegenwart eines in Wasser nicht oder nur begrenzt löslichen Alkohols, verseift werden, wobei man als Verseifungskatalysator eine Säure verwendet. In der DE-OS 2 445 959 wird ein Verfahren zur Umesterung von acyloxygruppenhaltigen polymeren Stoffen in einem Gemisch aus Wasser und Alkohol in Gegenwart von Halogenwasserstoff als Katalysator beschrieben. Nach diesen Methoden können hydroxylgruppenhaltige polymere Stoffe in beachtlichen Ausbeuten erhalten werden. Aber auch diese Verfahren weisen gewisse Nachteile auf. So muss man die als Umesterungskatalysatoren eingesetzten starken anorganischen Säuren nach durchgeführter Reaktion aus dem Polymeren durch Waschen mit Wasser entfernen. Dies führt zu der bereits oben erwähnten Bildung schwer zu brechender Emulsionen mit starker Schaumneigung. Ausserdem belasten die sauren wässrigen Salzlösungen in gewissem Umfange die Umwelt. Ferner besteht beim Einsatz eines sauren Katalysators die Gefahr der ungewollten Dehydratisierung nach Umesterung und damit die Bildung von Doppelbindungen im Molekül.

Der vorliegenden Erfindung lag die Aufgabe zugrunde, ein verfahrenstechnisch einfacheres und umweltfreundlicheres Verfahren zur Herstellung von Hydroxylgruppen enthaltenden Polymeren aus den entsprechenden Acyloxygruppen enthaltenden Polymeren zu finden, das die geschilderten Nachteile nicht aufweist.

Es wurde nun gefunden, dass man bei der Herstellung von Hydroxylgruppen enthaltenden Polymeren durch katalytische Hydrierung von Acyloxygruppen

enthaltenden Polymeren besonders vorteilhafte Ergebnisse erhält, wenn man zu den Acyloxygruppen enthaltenden Polymeren vor oder während der Hydrierung ein Oxid, Hydroxid oder Alkoholat der Alkali- oder Erdalkalimetalle gibt.

Acyloxygruppen enthaltende Polymere, die sich als Ausgangsstoffe eignen, sind z.B. mit Carbonsäuren, vorzugsweise Ameisensäure oder Essigsäure veresterte homo- und copolymere Alkohole. Diese Polymeren werden üblicherweise durch Homo- oder Mischpolymerisation aus den entsprechenden Estergruppen tragenden Monomeren, wie Isopropenyl-, Allyl- oder Vinylacetat durch z.B. radikalische Polymerisation erhalten. Desgleichen eignen sich auch Copolymere dieser Monomeren mit anderen olefinisch ungesättigten copolymerisierbaren Monomeren, wie Olefinen, Vinylaromaten oder Vinylhalogeniden, wie Styrol, Ethylen, Butadien und Vinylchlorid.

Besonders geeignete Ausgangsstoffe sind Acyloxygruppen, insbesondere Formiat- und Acetatgruppen enthaltende Polytetrahydrofurane mit Molekulargewichten von 300 bis 5000. Das sind Verbindungen der oben angegebenen Formel, in der mindestens einer der Reste X und Y ein Acylrest bedeutet.

Nach dem erfindungsgemässen Verfahren gibt man zu den Acyloxygruppen enthaltenden Polymeren vor oder während der Hydrierung eine der genannten starken Basen. Beispielsweise seien die Oxide oder Hydroxide des Calziums, Bariums, Strontiums oder Magnesiums genannt. Calziumoxid und Calziumhydroxid sind bevorzugt; sie sind gewöhnlich teilchenförmig oder vorteilhaft pulverförmig. Alkoholate sind z.B. Alkoxide mit Alkylresten, die 1 bis 4 C-Atome aufweisen. Die Konzentration der basischen Verbindungen in den Ausgangsgemischen für die Hydrierung liegt z.B. in dem Bereich von 0,001 bis 1, vorzugsweise 0,01 bis 0,1 Gewichtsprozent.

Man hydriert in Gegenwart von Katalysatoren. Geeignet sind Katalysatoren, die für die bekannte Carbonsäureesterhydrierung gebräuchlich sind. Das sind z.B. solche auf Basis von Eisen, Kupfer, Nickel, Kobalt, Silber, Platin und Palladium, die auch Zusätze von Chrom, Mangan, Molybdän, Vanadium, Wolfram und Zink enthalten können. Besonders geeignet sind solche Hydrierkatalysatoren die als aktives Metall Kupfer enthalten. Das Kupfer kann auf einen geeigneten Träger, wie Aluminiumoxid, Kieselsäuregel, Bimsstein, Magnesiumsilikat aufgetragen sein oder in geeigneter Weise mit dem Träger zusammen gefällt und nachträglich in die geeignete Form gebracht werden. Ein besonders geeigneter Katalysator der genannten Art wird z.B. in der DE-OS 2 445 303 beschrieben.

Die Hydrierung wird z.B. bei Temperaturen von 180 bis 280°C, vorzugsweise von 200 bis 250°C und unter einem Wasserstoffdruck von z.B. 200 bis 300 bar durchgeführt. Man führt die Hydrierung zweckmässigerweise nach dem an sich bekannten Rieselverfahren durch, bei dem das zu hydrierende Polymer in Gegenwart von Wasserstoff über den im Reaktionsofen fest eingebauten Katalysator herabrieselt, wobei man das Produkt der Hydrierung in einem Abscheidegefäss auffängt.

Besonders günstige Ergebnisse werden erhalten, wenn man die Acyloxygruppen enthaltenden Polymere in Gegenwart der Basen und eines Alkohols hydriert. Als Alkohole kommen niedere Alkohole, z.B. Alkanole mit 1 bis 5 C-Atomen, wie Methanol, Ethanol und Propanol in Betracht. Die Konzentration der Alkohole in dem zu hydrierenden Gemisch beträgt z.B. 5 bis 70, vorzugsweise 10 bis 50 Gewichtsprozent.

Nach dem neuen Verfahren erhält man die gewünschten Hydroxylgruppen enthaltenden Polymeren mit Farbzahlen von < 10 APHA glatt und auf besonders wirtschaftliche Weise. Dieses vorteilhafte Ergebnis war überraschend. So kann die Hydrierung der Acyloxygruppen enthaltenden Polymeren durch den Basenzusatz zu den Polymeren erheblich beschleunigt werden. Ausserdem wird im Gegensatz zu der basenfreien Hydrierung eine vollständige Hydrierung der Hydroxylgruppen enthaltenden Polymeren erreicht. Gewöhnlich verbleiben bei der Hydrierung eines Polytetrahydrofurans vom Molekulargewicht 1000 und der Verseifungszahl 112 mg KOH/g, dessen Molekülenden Acetylgruppen tragen, bei Verwendung üblicher kupferhaltiger Esterhydrierkatalysatoren selbst bei Verweilzeiten von 40 bis 60 Stunden und unter so extremen Hydrierbedingungen wie 250°C und 300 bar Wasserstoffdruck Restverseifungszahlen von > 5 mg KOH/g. Durch die erfindungsgemässe Hydrierung wird diese Hydrierzeit erheblich, z.B. bis um den Faktor 0,01 verkürzt. Ausserdem werden Restverseifungszahlen von 0,1 mg KOH/g erreicht.

Es ist auch schon vorgeschlagen worden, bei der Herstellung von Kupferkatalysatoren, die für die Hydrierung von Carbonsäureestern geeignet sind, Alkaliverbindungen zuzusetzen (s. DE-PS 1 159 925). Diese Katalysatoren zeigen aber bei der Hydrierung von Acyloxygruppen enthaltenden Polymeren keine besonders vorteilhafte Wirksamkeit. Es konnte somit nicht erwartet werden, dass es durch den erfindungsgemässen Zusatz einer Base zum zu hydrierenden Polymerisat gelingt, die Hydrierung bei so kurzen Hydrierzeiten und so tiefen Arbeitstemperaturen quantitativ durchzuführen. Ausserdem wurde überraschenderweise festgestellt, dass die übliche Lebensdauer der Hydrierkatalysatoren bei ihrem Einsatz beim erfindungsgemässen Verfahren erheblich überschritten wird.

Die in den folgenden Beispielen genannten Teile sind Gewichtsteile, sie verhalten sich zu Volumenteilen wie Kilogramm zu Liter.

*Beispiel 1*

Eine Mischung aus 900 Teilen eines Ethylen-Vinylacetat-Copolymerisates mit einem Molekulargewicht von ungefähr 2000 und einem Vinylacetatanteil von etwa 30%, 800 Teilen Methanol und 0,1 Teilen Calziumhydroxid werden in einem Schachtofen der Hydrierung unter folgenden Bedingungen unterworfen:

1000 Volumenteile des nach Beispiel 21 der DE-OS 2 726 710 hergestellten Katalysators mit der Zusammensetzung CuO. 1/2 $Co_2O_3 \cdot 2 SiO_2$ werden in Form von zylinderförmigen Tabletten von 3 mm Höhe und 3 mm Durchmesser in einen Schachtofen eingefüllt. Die Länge des Schachtofens verhält sich

zu seinem Durchmesser wie 58 : 1. Bei 200°C wird der Ofen stündlich mit 100 Volumenteilen der oben beschriebenen Mischung beschickt. Gleichzeitig befinden sich 4000 Volumenteile des Zulaufes durch ständige Rückführung im Umlauf.

Zu Beginn der Hydrierung wird während des Aufheizens Wasserstoff bis zu einem Druck von 10 bar aufgepresst, um zunächst den Katalysator vorsichtig in der flüssigen Phase zu reduzieren. Dann wird der Wasserstoffdruck langsam von 10 auf 250 bar erhöht. Ab 150°C setzt die Reduktion des Katalysators ein, die sich durch eine merkliche exotherme Reaktion anzeigt. Sobald diese abgeklungen ist, wird die Temperatur auf 230°C erhöht und ein Wasserstoffdruck von 250 bar eingestellt. Während der Reduktion werden aus dem Ofen 50 Normalvolumenteile Wasserstoff pro Stunde als Abgas abgeleitet. Dem Ofen wird die Lösung eines hydroxylgruppenhaltigen Polymerisates entnommen. Nach Abdestillieren des Methanols und des bei der Hydrierung entstandenen Ethanols weist das Polymerisat eine Restesterzahl von 0,85 mg KOH/g auf. Wird die Polymerisatlösung vor ihrer Aufarbeitung noch einmal durch den Hydrierofen unter den angegebenen Bedingungen geleitet, so erhält man ein hydroxylgruppenhaltiges Polymerisat, das eine Esterzahl von ca. 0,1 und eine Farbzahl von < 10 APHA aufweist.

Ein ähnliches Ergebnis wird erhalten, wenn man wie beschriebenen verfährt und dabei einen trägerfreien Katalysator verwendet, der folgendermassen hergestellt wird: Durch gute mechanische Durchmischung der Oxide oder Carbonate des Kupfers und Chroms, die man durch gemeinsame Fällung der Nitrate oder Ammoniumverbindungen der Metalle und Trocknung erhält, wird ein Gemisch aus 66 Gew.-% Kupferoxid und 31 Gew.-% Chromoxid hergestellt. Man verpresst das Gemisch zu Pillen, die man auf 350°C erhitzt.

*Beispiel 2*

Einem Polytetrahydrofuran mit dem Molekulargewicht 1000 und der Verseifungszahl 112, dessen Molekülenden Acetylgruppen tragen, werden 3 Gew.-% Ethanol und 0,15 Gew.-% Natriumethylat zugesetzt. Man hydriert dieses Gemisch in der im Beispiel 1 beschriebenen Hydrierapparatur unter den dort genannten Bedingungen (250 bar Wasserstoff, 230°C), wobei man jedoch den nach Beispiel 1 der DE-OS 2 445 303 erhältlichen Kupfer und Aluminium enthaltenden Katalysator verwendet. Nach einmaligem Durchgang durch den Hydrierofen erhält man nach Abtrennen des zugesetzten und des entstandenen Ethylalkohols ein Polytetramethylenetherglykol mit der Hydroxylzahl 111 mg KOH/g. Die Restesterzahl wird zu 1,32 mg KOH/g bestimmt. Unterwirft man das nach einmaligem Durchgang erhaltene Polytetramethylenetherglykol unter den genannten Bedingungen erneut der Hydrierung, so wird ein Produkt mit der Restverseifungszahl < 0,1 mg KOH/g und der Farbzahl < 10 APHA erhalten.

Wird die Hydrierung fortlaufend durchgeführt, so kann der anfängliche Zusatz von Ethanol zum Frischzulauf unterbleiben, ohne dass sich das Ergebnis merklich ändert.

**Patentansprüche**

1. Verfahren zur Herstellung von Hydroxylgruppen enthaltenden Polymeren durch katalytische Hydrierung von Acyloxygruppen enthaltenden Polymeren, dadurch gekennzeichnet, dass man zu den Acyloxygruppen enthaltenden Polymeren vor oder während der Hydrierung ein Oxid, Hydroxid oder Alkoholat der Alkali- oder Erdalkalimetalle gibt.

2. Verfahren nach Anspruch 1, dadurch gekennzeichnet, dass man die Acyloxygruppen enthaltenden Polymere in Gegenwart der Basen und eines Alkohols hydriert.

**Claims**

1. A process for the preparation of a hydroxyl-containing polymer by catalytic hydrogenation of an acyloxy-containing polymer, wherein an oxide, hydroxide or alkoholate of an alkali metal or alkaline earth metal is added to the acyloxy-containing polymer before or during the hydrogenation.

2. A process as claimed in claim 1, wherein the acyloxy-containing polymer is hydrogenated in the presence of a base and of an alcohol.

**Revendications**

1. Procédé de préparation de polymères contenant des groupes hydroxyle par une hydrogénation catalysée de polymères comportant des groupes acyloxy, caractérisé en ce que l'on ajoute aux polymères comportant des groupes acyloxy, soit avant, soit pendant l'hydrogénation, un oxyde, un hydroxyde ou un alcoolate d'un métal alcalin ou alcalino-terreux.

2. Procédé suivant la revendication 1, caractérisé en ce que l'hydrogénation des polymères comportant des groupes acyloxy est réalisée en présence de bases et d'un alcool.